# EUROPEAN PATENT APPLICATION

(11) **EP 4 823 152 A1**
(43) Date of publication of application: **14.10.2026**
(21) Application number: 24917992.0
(22) Date of filing: 22.07.2024
(51) Int. Cl.: H04W 24/02

(54) **AMBIENT INTERNET OF THINGS MULTIPLEXING METHOD AND SYSTEM**

(30) Priority: 17.01.2024 CN 202410073437
(71) Applicant: ZTE CORPORATION, Shenzhen, Guangdong 518057 (CN)
(72) Inventor: BI, Feng, Shenzhen, Guangdong 518057 (CN); LU, Youxiong, Shenzhen, Guangdong 518057 (CN); XING, Weimin, Shenzhen, Guangdong 518057 (CN); HU, Yuzhou, Shenzhen, Guangdong 518057 (CN); CHEN, Jie, Shenzhen, Guangdong 518057 (CN); HE, Haigang, Shenzhen, Guangdong 518057 (CN); MIAO, Ting, Shenzhen, Guangdong 518057 (CN)
(74) Representative: Mozzi, Matteo
(86) International application number: PCT/CN2024/106812
(87) International publication number: WO 2025/152379

(57) **Abstract**

Embodiments of the present disclosure provide an Ambient Internet of Things multiplexing method and system. The method comprises: a first entity configures or pre-configures a communication mode for an Internet of Things device, the communication mode comprising at least one of the following: a co-existence mode of a resource occupied by the Internet of Things device, a multiplexing mode of multiple Internet of Things devices, and a duplex mode of the Internet of Things device.

## Description

### Cross-Reference to Related Application

The present disclosure claims priority to the Chinese Patent Application No. CN202410073437.1 filed on January 17, 2024, and entitled "Multiplexing Method and System for Ambient-Internet of Things", the entire disclosure of which is incorporated herein by reference.

### Technical Field

The present disclosure relates to the communication field, and specifically, to a multiplexing method and system for Ambient-Internet of Things (Ambient-IoT, abbreviated as A-IoT).

### Background

With the continuous advancement of radio technology, a wide variety of radio services have emerged. In addition to cellular services between base stations and User Equipment (UE), a Long Term Evolution (LTE) system and a New Radio (NR) system also support Internet of Things (IoT) services, i.e., communications between base stations and IoT devices. IoT devices are generally powered by conventional batteries with limited service life. Under extreme environmental conditions, maintaining continuous operation of IoT devices and replacing batteries for the IoT devices may pose significant challenges. On the other hand, an increasing number of large-scale commercial use cases require IoT devices with ultra-small dimensions and extended service lifespans. Accordingly, LTE systems, NR systems, and future communication systems all need to accommodate battery-free IoT devices featuring ultra-low power consumption, ultra-low complexity, and ultra-low manufacturing cost.

Conventional solutions have introduced battery-free IoT devices referred to as Ambient-IoT (A-IoT) or Passive-IoT (P-IoT). These battery-free IoT devices acquire operational power by harvesting energy from ambient radio frequency signals or other environmental energy sources.

In communication scenarios of Ambient-IoT, the following two critical technical problems remain unsolved: how A-IoT devices coexist with existing communication systems, and how resource multiplexing is realized among multiple A-IoT devices.

### Summary

Embodiments of the present disclosure provide a multiplexing method and system for Ambient-Internet of Things, so as to at least solve the problem of resource multiplexing for Ambient-IoT devices in the related art.

According to an embodiment of the present disclosure, a multiplexing method for Ambient-Internet of Things is provided. The method includes: configuring or pre-configuring, by a first entity, a communication mode for an IoT device, wherein the communication mode includes at least one of: a coexistence mode for resources occupied by the IoT device, a multiplexing mode among a plurality of IoT devices, or a duplex mode for the IoT device.

According to another embodiment of the present disclosure, a resource multiplexing system for Ambient-Internet of Things is provided. The system includes a first entity and a plurality of IoT devices, wherein the first entity is configured to configure or pre-configure a communication mode for an IoT device, wherein the communication mode includes at least one of: a coexistence mode for resources occupied by the IoT device, a multiplexing mode among the plurality of IoT devices, or a duplex mode for the IoT device.

According to still another embodiment of the present disclosure, a computer-readable storage medium is further provided. The computer-readable storage medium stores a computer program therein, and the computer program, when executed by a processor, causes the processor to implement the operations of any one of the foregoing method embodiments.

According to still another embodiment of the present disclosure, an electronic device is further provided, which includes a memory and a processor. The memory stores a computer program, and the processor is configured to execute the computer program to implement the operations of any one of the foregoing method embodiments.

### Brief Description of the Drawings

Fig. 1 is a flowchart of a multiplexing method for Ambient-Internet of Things according to an embodiment of the present disclosure;
Fig. 2 is a schematic diagram of configuration or pre-configuration of a communication mode according to an embodiment of the present disclosure; and
Fig. 3 is a structural block diagram of a multiplexing system for Ambient-Internet of Things according to an embodiment of the present disclosure.

### Detailed Description of the Embodiments

The embodiments of the present disclosure will be described in detail below with reference to the accompanying drawings in conjunction with the embodiments.

It should be noted that the terms "first", "second", and the like in the specification, claims, and accompanying drawings of the present disclosure are used to distinguish similar objects, and are not necessarily intended to describe a specific sequence or order.

The embodiments of the present disclosure are applied to IoT services and implemented in LTE systems and NR systems. Exemplarily, typical IoT services in an LTE system include Narrow Band-Internet of Things (NB-IoT), Machine Type Communication (MTC), and enhanced Machine Type Communication (eMTC). Typical IoT services in an NR system include Reduced Capability (RedCap) and enhanced Reduced Capability (eRedCap).

The embodiments of the present disclosure can be widely applied to various commercial scenarios, including but not limited to warehousing, logistics, supply chains, smart home, environmental monitoring, intelligent agriculture and animal husbandry, item searching, shopping malls, venue navigation, medical device status modification, device activation and deactivation, and elderly healthcare.

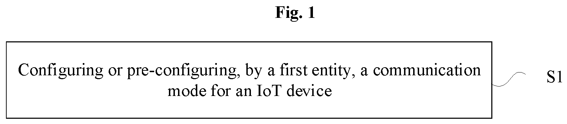

An embodiment of the present disclosure provides a multiplexing method for Ambient-Internet of Things. Fig. 1 is a flowchart of a multiplexing method for Ambient-Internet of Things according to an embodiment of the present disclosure. As shown in Fig. 1, the flow includes the following operation S1.

In operation S1, a first entity configures or pre-configures a communication mode for an IoT device.

In the present embodiment, the communication mode includes at least one of: a coexistence mode for resources occupied by the IoT device, a multiplexing mode among a plurality of IoT devices, or a duplex mode for the IoT device.

The technical solution provided in the embodiments of the present disclosure can solve the problem of resource multiplexing for Ambient-IoT devices in the related art.

In some embodiments, the first entity includes at least one of: a network node, a relay node, an auxiliary node, a terminal node, a Radio Resource Control (RRC) layer, a Radio Link Control (RLC) layer, a Medium Access Control (MAC) layer, or a Physical (PHY) layer. The network node, the relay node, the auxiliary node, and the terminal node are physical entities, while the RRC layer, the RLC layer, the MAC layer, and the PHY layer are logical entities.

In an exemplary embodiment, the network node may include a base station. The relay node includes an Integrated Access and Backhaul (IAB) node, a repeater, or a terminal node with a relay function. The auxiliary node may include an IAB node, a repeater, or a terminal node with a relay function. The terminal node may include User Equipment (UE). The IoT device may be an A-IoT device.

In some embodiments, the first entity and the IoT device in operation S1 may communicate directly or indirectly. Exemplarily, an A-IoT network has four available topological deployment modes. Under the first topological deployment mode, a network node conducts direct communication with an A-IoT device. Under the second topological deployment mode, a relay node is arranged between the network node and the A-IoT device. Under the third topological deployment mode, an auxiliary node is deployed between the network node and the A-IoT device to assist uplink or downlink data transmission of the target A-IoT device. Under the fourth topological deployment mode, direct communication is realized between a terminal node and the A-IoT device.

In some embodiments, the first entity may serve as a reader/writer, and the IoT device may serve as a tag, such as a Radio Frequency Identification (RFID) tag.

In some embodiments, operation S1 may include operation S11. In operation S11, the first entity configures or pre-configures for the IoT device a coexistence mode for resources occupied by the IoT device.

In some embodiments, the coexistence mode includes at least one of: out-of-band resources of Orthogonal Frequency Division Multiplexing (OFDM) symbols; in-band resources of the OFDM symbols; guard band resources of the OFDM symbols.

In some embodiments, a signal transmission mode of the first entity includes at least one of:
carrier signal transmission, wherein the carrier signal transmission includes transmission performed via unmodulated radio frequency signals;
OFDM transmission, wherein the OFDM transmission includes transmission performed after OFDM modulation.

In some embodiments, a signal reception mode of the first entity includes at least one of:
backscatter reception, wherein the backscatter reception includes envelope detection, frequency detection, or phase detection;
filter-based reception, wherein the filter-based reception includes performing envelope detection after filtering, performing frequency detection after filtering, or performing phase detection after filtering;
OFDM reception, wherein the OFDM reception includes performing OFDM demodulation after reception.

In some embodiments, a signal transmission mode of the IoT device includes at least one of:
backscattering, wherein the backscattering includes modulating and reflecting received carrier signals;
OFDM transmission, wherein the OFDM transmission includes transmission performed after OFDM modulation.

In some embodiments, a signal reception mode of the IoT device includes at least one of:
coupling reception, wherein the coupling reception includes receiving carrier signals through electromagnetic coupling, inductive coupling, capacitive coupling, resistive coupling, magnetic resonance coupling or antenna coupling;
filter-based reception, wherein the filter-based reception includes receiving carrier signals through the electromagnetic coupling, the inductive coupling, the capacitive coupling, the resistive coupling, the magnetic resonance coupling or the antenna coupling after filtering processing;
OFDM reception, wherein the OFDM reception includes performing OFDM demodulation after reception.

The embodiments of the present disclosure mainly relate to coexistence between communication resources occupied by the first entity and communication resources occupied by the IoT device. Therefore, the signal transmission of the first entity has a corresponding relationship with the signal reception of the IoT device. Similarly, the signal reception of the first entity has a corresponding relationship with the signal transmission of the IoT device.

By virtue of the technical solution provided in the embodiments of the present disclosure, resource coexistence between IoT devices and other types of devices (such as the first entity) can be realized in Ambient-IoT, thereby solving the problem of resource multiplexing of Ambient-IoT devices in the related art.

In some embodiments, operation S1 may further include operation S12. In operation S12, the first entity configures or pre-configures for the IoT device a multiplexing mode among a plurality of IoT devices.

In some embodiments, the multiplexing mode includes at least one of: Time Division Multiple Access (TDMA), Frequency Division Multiple Access (FDMA), Code Division Multiple Access (CDMA), Space Division Multiple Access (SDMA), or Non-orthogonal Multiple Access (NOMA).

In some embodiments, the multiplexing mode is configured or pre-configured according to an application scenario, and different application scenarios correspond to different multiplexing modes.

Exemplarily, Scenario 1 insensitive to time delay may be configured to adopt TDMA; Scenario 2 sensitive to time delay may be configured to adopt FDMA; Scenario 3 with the number of terminal devices exceeding a certain threshold (i.e., massive terminals) may be configured to adopt NOMA.

In some embodiments, the multiplexing mode is configured or pre-configured according to resources, and different resources correspond to different multiplexing modes.

Exemplarily, Resource 1 may adopt TDMA, Resource 2 may adopt FDMA, Resource 3 may adopt CDMA, Resource 4 may adopt SDMA, and Resource 5 may adopt NOMA.

In the present embodiment, the different resources refer to resources spanning multiple dimensions that do not fully coincide with each other, such as time domain resources, frequency domain resources, code domain resources, spatial domain resources, and power domain resources.

In some embodiments, the multiplexing mode is configured or pre-configured according to the IoT device, and different IoT devices correspond to different multiplexing modes.

Exemplarily, Device 1 may adopt TDMA, Device 2 may adopt FDMA, Device 3 may adopt CDMA, Device 4 may adopt SDMA, and Device 5 may adopt NOMA.

In the present embodiment, multiplexing of the plurality of IoT devices based on FDMA specifically includes at least one of: frequency-modulated backscattering among the plurality of A-IoT devices, frequency-hopping backscattering among the plurality of A-IoT devices, or multiplexing among the plurality of A-IoT devices by using different frequency resources. Further, frequency modulation or frequency hopping includes adjusting the frequency of carrier signals during backscattering or backscatter reception, wherein the frequencies corresponding to frequency modulation and frequency hopping may be configured or pre-configured.

In the present embodiment, multiplexing of the plurality of IoT devices based on CDMA specifically includes multiplexing among the plurality of A-IoT devices by using device identifiers or orthogonal codes, wherein the device identifiers and orthogonal codes may be configured or pre-configured.

In the present embodiment, multiplexing of the plurality of IoT devices based on SDMA specifically includes multiplexing among the plurality of A-IoT devices by using digital beams and/or analog beams, wherein the digital beams and analog beams may be configured or pre-configured.

In an exemplary embodiment, in a case where no multiplexing mode is configured or pre-configured for the A-IoT device, TDMA may be used as the default multiplexing mode.

In some embodiments, the first entity may be a terminal-type reader/writer, and a multiplexing mode for the reader/writer may also be configured or pre-configured in this case. The resource multiplexing modes corresponding to multiple readers/writers include at least one of: resource configuration by a network node, resource sensing, and resource configuration by a head node.

In an exemplary embodiment, assuming that three readers/writers exist in the Ambient-IoT system, resource multiplexing of the first entity may be implemented by any one of the following manners:
Manner 1: A network node configures resources used by Reader/Writer 1, Reader/Writer 2, and Reader/Writer 3;
Manner 2: Reader/Writer 1, Reader/Writer 2, and Reader/Writer 3 perform resource sensing, and occupy resources when the resources are idle;
Manner 3: An arbitrary reader/writer such as Reader/Writer 1 is set as a head node, the network node configures resources for the head node, and the head node configures resources for Reader/Writer 2 and Reader/Writer 3;
Manner 4: An arbitrary reader/writer such as Reader/Writer 1 is set as a head node, the head node performs resource sensing, and configures resources for Reader/Writer 2 and Reader/Writer 3 when the resources are idle.

In an exemplary embodiment, in a case where no multiplexing mode is configured or pre-configured for the readers/writers, resource sensing may be adopted as the default multiplexing mode.

By virtue of the technical solution provided in the embodiments of the present disclosure, resource multiplexing among the plurality of IoT devices can be realized in Ambient-IoT, thereby solving the problem of resource multiplexing of Ambient-IoT devices in the related art.

In some embodiments, operation S1 may further include operation S13. In operation S13, the first entity configures or pre-configures for the IoT device a duplex mode for the IoT device.

In some embodiments, the duplex mode includes at least one of: a full duplex mode, a subband full duplex mode, or a half duplex mode.

In an exemplary embodiment, the full duplex mode adopted by the IoT device includes at least one of: immediately reflecting signals after receiving the signals; receiving signals and harvesting energy from the received signals before energy reaches a preset threshold, and after the energy reaches the preset threshold, immediately reflecting signals after receiving the signals; immediately transmitting signals after receiving the signals; receiving signals and harvesting energy from the received signals before the energy reaches the preset threshold, and after the energy reaches the preset threshold, immediately transmitting signals after receiving the signals.

In an exemplary embodiment, the subband full duplex mode adopted by the IoT device refers to that a receiving antenna and a transmitting antenna of the IoT device are mutually independent, and the IoT device switches between receiving operation and transmitting operation within a pre-configured guard band.

In an exemplary embodiment, the half duplex mode adopted by the IoT device refers to that the IoT device performs receiving operation and transmitting operation in a time division multiplexing manner, and the IoT device switches between the receiving operation and the transmitting operation within a pre-configured guard interval.

In some embodiments, in a case where the IoT device operates in the full duplex mode, the first entity is configured to operate in the full duplex mode. Exemplarily, the first entity may implement full duplex by using independent receiving antennas and transmitting antennas.

In some embodiments, in a case where the IoT device operates in the half duplex mode, the first entity is configured to operate in either the half duplex mode or the subband full duplex mode.

Exemplarily, the first entity may adopt independent receiving antennas and transmitting antennas, and switch between reception and transmission (reception to transmission/transmission to reception) within a pre-configured guard interval to implement half duplex operation.

In some embodiments, in a case where the IoT device operates in the subband full duplex mode, the first entity is configured to operate in the subband full duplex mode.

Exemplarily, the first entity may adopt independent receiving antennas and transmitting antennas, and switch between reception and transmission (reception to transmission/transmission to reception) within a pre-configured guard band to implement subband full duplex operation.

In an exemplary embodiment, the default duplex mode for both the IoT device and the first entity may be half duplex.

By virtue of the technical solution provided in the embodiments of the present disclosure, the duplex mode for signal reception and transmission of IoT devices can be configured in Ambient-IoT, thereby solving the problem of resource multiplexing of Ambient-IoT devices in the related art.

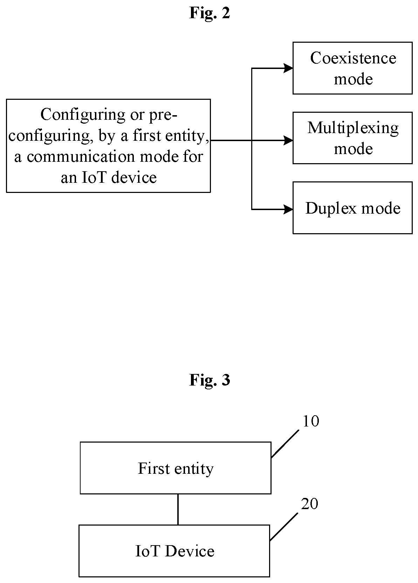

Fig. 2 is a schematic diagram of configuration or pre-configuration of a communication mode according to an embodiment of the present disclosure. As shown in Fig. 2, the communication modes include a coexistence mode, a multiplexing mode, and a duplex mode. The first entity can configure or pre-configure the communication modes for the IoT device.

The technical solution provided in the embodiments of the present disclosure can solve the configuration problems of the coexistence mode, the multiplexing mode, and the duplex mode in the related art.

Another embodiment of the present disclosure further provides a multiplexing system for Ambient-Internet of Things.

Fig. 3 is a structural block diagram of a multiplexing system for Ambient-Internet of Things according to an embodiment of the present disclosure. As shown in Fig. 3, the system includes a first entity 10 and an IoT device 20.

In the present embodiment, the first entity 10 is configured to configure or pre-configure a communication mode for an IoT device, wherein the communication mode includes at least one of: a coexistence mode for resources occupied by the IoT device, a multiplexing mode among the plurality of IoT devices, or a duplex mode for the IoT device.

In some embodiments, the first entity includes at least one of: a network node, a relay node, an auxiliary node, a terminal node, a Radio Resource Control (RRC) layer, a Radio Link Control (RLC) layer, a Medium Access Control (MAC) layer, or a Physical (PHY) layer. The network node, the relay node, the auxiliary node, and the terminal node are physical entities, while the RRC layer, the RLC layer, the MAC layer, and the PHY layer are logical entities.

In an exemplary embodiment, the network node may include a base station. The relay node includes an Integrated Access and Backhaul (IAB) node, a repeater, or a terminal node with a relay function. The auxiliary node may include an IAB node, a repeater, or a terminal node with a relay function. The terminal node may include User Equipment (UE).

In some embodiments, the IoT device may be an A-IoT device.

In some embodiments, the first entity and the IoT device may communicate directly or indirectly. Exemplarily, an A-IoT network has four available topological deployment modes. Under the first topological deployment mode, a network node conducts direct communication with an A-IoT device. Under the second topological deployment mode, a relay node is arranged between the network node and the A-IoT device. Under the third topological deployment mode, an auxiliary node is deployed between the network node and the A-IoT device to assist uplink or downlink data transmission of the target A-IoT device. Under the fourth topological deployment mode, direct communication is realized between a terminal node and the A-IoT device.

In some embodiments, the first entity may serve as a reader/writer, and the IoT device may serve as a tag, such as a Radio Frequency Identification (RFID) tag.

In some embodiments, the first entity is further configured to configure or pre-configure for the IoT device a coexistence mode for resources occupied by the IoT device. The coexistence mode includes at least one of: out-of-band resources of Orthogonal Frequency Division Multiplexing (OFDM) symbols; in-band resources of the OFDM symbols; guard band resources of the OFDM symbols.

In some embodiments, the first entity is further configured to transmit unmodulated radio frequency signals, or transmit OFDM symbols after OFDM modulation.

In some embodiments, the first entity is further configured to perform backscatter reception through envelope detection, frequency detection, or phase detection; or perform filter-based reception through envelope detection, frequency detection, or phase detection after filtering; or perform OFDM reception by receiving OFDM symbols and executing OFDM demodulation.

In some embodiments, the IoT device is further configured to perform backscattering, i.e., modulating and reflecting received carrier signals, or transmit OFDM symbols after OFDM modulation.

In some embodiments, the IoT device is further configured to perform coupling reception, wherein the coupling reception includes receiving carrier signals through electromagnetic coupling, inductive coupling, capacitive coupling, resistive coupling, magnetic resonance coupling, or antenna coupling.

In some embodiments, the IoT device is further configured to perform filter-based reception, wherein the filter-based reception includes receiving carrier signals through the electromagnetic coupling, the inductive coupling, the capacitive coupling, the resistive coupling, the magnetic resonance coupling, or the antenna coupling after filtering processing.

In some embodiments, the IoT device is further configured to receive OFDM symbols and perform OFDM reception by executing OFDM demodulation.

In some embodiments, the first entity is further configured to configure or pre-configure for the IoT device a multiplexing mode among a plurality of IoT devices, wherein the multiplexing mode includes at least one of Time Division Multiple Access (TDMA), Frequency Division Multiple Access (FDMA), Code Division Multiple Access (CDMA), Space Division Multiple Access (SDMA), and Non-orthogonal Multiple Access (NOMA).

In some embodiments, the first entity is further configured to configure or pre-configure the multiplexing mode according to an application scenario, and different application scenarios correspond to different multiplexing modes.

Exemplarily, the first entity may configure Scenario 1 insensitive to time delay to adopt TDMA; configure Scenario 2 sensitive to time delay to adopt FDMA; configure Scenario 3 with a massive number of terminals exceeding a preset threshold to adopt NOMA.

In some embodiments, the first entity is further configured to configure or pre-configure the multiplexing mode according to resources, and different resources correspond to different multiplexing modes.

Exemplarily, Resource 1 may adopt TDMA, Resource 2 may adopt FDMA, Resource 3 may adopt CDMA, Resource 4 may adopt SDMA, and Resource 5 may adopt NOMA.

In the present embodiment, the different resources refer to resources spanning multiple dimensions that do not fully coincide with each other, such as time domain resources, frequency domain resources, code domain resources, spatial domain resources, and power domain resources.

In some embodiments, the first entity is further configured to configure or pre-configure the multiplexing mode according to the IoT device, and different IoT devices correspond to different multiplexing modes.

Exemplarily, Device 1 may adopt TDMA, Device 2 may adopt FDMA, Device 3 may adopt CDMA, Device 4 may adopt SDMA, and Device 5 may adopt NOMA.

In some embodiments, the first entity is further configured to configure or pre-configure for the IoT device a duplex mode for the IoT device, wherein the duplex mode includes at least one of: a full duplex mode, a subband full duplex mode, or a half duplex mode.

The technical solution provided in the embodiments of the present disclosure address multi-dimensional resource multiplexing problems of IoT devices in Ambient-IoT communication scenarios, including resource multiplexing with different types of devices, resource multiplexing among multiple devices of the same type, and transmit-receive resource multiplexing for a single device. With the evolution of wireless mobile communication systems, extensive and in-depth research on Ambient-IoT can be realized. The coexistence mode, multiplexing mode, and duplex mode for Ambient-IoT communication are essential technologies for Ambient-IoT and possess broad commercial prospects.

The embodiments of the present disclosure further provide a computer-readable storage medium storing a computer program therein. The computer program, when executed by a processor, causes the processor to perform the operations of any one of the foregoing method embodiments.

In an exemplary embodiment, the computer-readable storage medium may include, but is not limited to, a Universal Serial Bus (USB) flash drive, a Read-Only Memory (ROM), a Random Access Memory (RAM), a mobile hard disk, a magnetic disk, an optical disc, and other media capable of storing computer programs.

The embodiments of the present disclosure further provide an electronic device, including a memory and a processor. The memory stores a computer program, and the processor is configured to execute the computer program to perform the operations of any one of the foregoing method embodiments.

In an exemplary embodiment, the electronic device may further include a transmission device and an input/output device. The transmission device is connected to the processor, and the input/output device is connected to the processor.

For specific examples in the present embodiment, reference may be made to the examples described in the foregoing embodiments and exemplary implementations, which will not be repeated herein.

It is apparent to those having ordinary skill in the art that the foregoing modules or operations of the present disclosure can be implemented by a general-purpose computing device. They may be centralized on a single computing device or distributed across a network formed by multiple computing devices, and can be implemented by program codes executable by the computing device, so as to be stored in a storage device for execution by the computing device. In some cases, the operations shown or described may be executed in an order different from that described herein, or manufactured as individual integrated circuit modules respectively, or multiple modules or operations thereof may be manufactured as a single integrated circuit module. Accordingly, the present disclosure is not limited to any specific combination of hardware and software.

The foregoing descriptions are merely exemplary embodiments of the present disclosure and are not intended to limit the present disclosure. Various modifications and variations can be made to the present disclosure by those having ordinary skill in the art. Any modification, equivalent replacement, improvement, and the like made within the principle of the present disclosure shall fall within the protection scope of the present disclosure.

## Claims

1. A multiplexing method for Ambient-Internet of Things, IoT, comprising:
configuring or pre-configuring, by a first entity, a communication mode for an IoT device, wherein the communication mode comprises at least one of: a coexistence mode for resources occupied by the IoT device, a multiplexing mode among a plurality of IoT devices, or a duplex mode for the IoT device.

2. The method according to claim 1, wherein the first entity comprises at least one of: a network node, a relay node, an auxiliary node, a terminal node, a Radio Resource Control, RRC, layer, a Radio Link Control, RLC, layer, a Medium Access Control, MAC, layer, or a Physical, PHY, layer.

3. The method according to claim 1, wherein the coexistence mode comprises at least one of:
out-of-band resources of Orthogonal Frequency Division Multiplexing, OFDM, symbols;
in-band resources of the OFDM symbols;
guard band resources of the OFDM symbols.

4. The method according to claim 3, wherein a signal transmission mode of the first entity comprises at least one of:
carrier signal transmission, wherein the carrier signal transmission comprises transmission performed via unmodulated radio frequency signals;
OFDM transmission, wherein the OFDM transmission comprises transmission performed after OFDM modulation.

5. The method according to claim 3, wherein a signal reception mode of the first entity comprises at least one of:
backscatter reception, wherein the backscatter reception comprises envelope detection, frequency detection, or phase detection;
filter-based reception, wherein the filter-based reception comprises performing envelope detection after filtering, performing frequency detection after filtering, or performing phase detection after filtering;
OFDM reception, wherein the OFDM reception comprises performing OFDM demodulation after reception.

6. The method according to claim 3, wherein a signal transmission mode of the IoT device comprises at least one of:
backscattering, wherein the backscattering comprises modulating and reflecting received carrier signals;
OFDM transmission, wherein the OFDM transmission comprises transmission performed after OFDM modulation.

7. The method according to claim 3, wherein a signal reception mode of the IoT device comprises at least one of:
coupling reception, wherein the coupling reception comprises receiving carrier signals through electromagnetic coupling, inductive coupling, capacitive coupling, resistive coupling, magnetic resonance coupling or antenna coupling;
filter-based reception, wherein the filter-based reception comprises receiving carrier signals through the electromagnetic coupling, the inductive coupling, the capacitive coupling, the resistive coupling, the magnetic resonance coupling or the antenna coupling after filtering processing;
OFDM reception, wherein the OFDM reception comprises performing OFDM demodulation after reception.

8. The method according to claim 1, wherein the multiplexing mode comprises at least one of:
Time Division Multiple Access, TDMA, Frequency Division Multiple Access, FDMA, Code Division Multiple Access, CDMA, Space Division Multiple Access, SDMA, or Non-orthogonal Multiple Access, NOMA.

9. The method according to claim 8, wherein the multiplexing mode is configured or pre-configured according to an application scenario, and different application scenarios correspond to different multiplexing modes.

10. The method according to claim 8, wherein the multiplexing mode is configured or pre-configured according to resources, and different resources correspond to different multiplexing modes.

11. The method according to claim 8, wherein the multiplexing mode is configured or pre-configured according to the IoT device, and different IoT devices correspond to different multiplexing modes.

12. The method according to claim 1, wherein the duplex mode comprises at least one of:
a full duplex mode, a subband full duplex mode, or a half duplex mode.

13. The method according to claim 12, wherein the full duplex mode comprises at least one of:
immediately reflecting signals after receiving the signals;
receiving signals and harvesting energy from the received signals before energy reaches a preset threshold, and after the energy reaches the preset threshold, immediately reflecting signals after receiving the signals;
immediately transmitting signals after receiving the signals;
receiving signals and harvesting energy from the received signals before the energy reaches the preset threshold, and after the energy reaches the preset threshold, immediately transmitting signals after receiving the signals.

14. The method according to claim 12, wherein the subband full duplex mode comprises that:
a receiving antenna and a transmitting antenna of the IoT device are mutually independent, and the IoT device switches between receiving operation and transmitting operation within a pre-configured guard band.

15. The method according to claim 12, wherein the half duplex mode comprises that:
the IoT device performs receiving operation and transmitting operation in a time division multiplexing manner, and the IoT device switches between the receiving operation and the transmitting operation within a pre-configured guard interval.

16. The method according to claim 12, wherein in a case where the IoT device operates in the full duplex mode, the first entity is configured to operate in the full duplex mode.

17. The method according to claim 12, wherein in a case where the IoT device operates in the half duplex mode, the first entity is configured to operate in either the half duplex mode or the subband full duplex mode.

18. The method according to claim 12, wherein in a case where the IoT device operates in the subband full duplex mode, the first entity is configured to operate in the subband full duplex mode.

19. A multiplexing system for Ambient-Internet of Things, IoT, comprising a first entity and a plurality of IoT devices, wherein the first entity is configured to configure or pre-configure a communication mode for an IoT device, wherein the communication mode comprises at least one of: a coexistence mode for resources occupied by the IoT device, a multiplexing mode among the plurality of IoT devices, or a duplex mode for the IoT device.

20. A computer-readable storage medium, storing a computer program therein, wherein the computer program, when executed by a processor, causes the processor to implement the method according to any one of claims 1 to 18.

21. An electronic device, comprising a memory and a processor, wherein the memory stores a computer program, and the processor is configured to execute the computer program to implement the method according to any one of claims 1 to 18.
